# NEUE EUROPÄISCHE PATENTSCHRIFT

(11) **EP 2 908 025 B2**
(45) Veröffentlichungstag und Bekanntmachung des Hinweises auf die Entscheidung über den Einspruch: **13.07.2022**
(45) Hinweis auf die Patenterteilung: 05.06.2019
(21) Anmeldenummer: 15153032.6
(22) Anmeldetag: 29.01.2015
(51) Int. Cl.: F16H 45/02, F16F 15/12

(54) **LEISTUNGSVERZWEIGTES DÄMPFUNGSSYSTEM**
Power-split damping system
Système d'amortissement à puissance dérivée

(30) Priorität: 12.02.2014 DE 102014202565
(43) Veröffentlichungstag der Anmeldung: 19.08.2015
(73) Patentinhaber: Schaeffler Technologies AG & Co. KG, 91074 Herzogenaurach (DE)
(72) Erfinder: Degler, Mario, 76534 Baden-Baden (DE); Maienschein, Stephan, 76534 Baden-Baden (DE)
(74) Vertreter: DTS Patent- und Rechtsanwälte Schnekenbühl und Partner mbB

(56) Entgegenhaltungen:
- DE-A1-102011 075 243
- DE-A1-102011 075 244
- US-A1- 2012 080 281

## Beschreibung

Die Erfindung betrifft ein System zur Übertragung von Drehmoment. Insbesondere betrifft die Erfindung ein solches System, das ein leistungsverzweigtes Dämpfungssystem umfasst.

Zur Übertragung von Drehmoment, beispielsweise in einem Antriebsstrang an Bord eines Kraftfahrzeugs, ist ein Übertragungssystem für Drehmoment vorgesehen. Das Übertragungssystem kann insbesondere zwischen einem Antriebsmotor und einem Getriebe platziert sein und hat die Aufgabe, einen Fluss von Drehmoment steuerbar zu ermöglichen oder zu unterbrechen. Zusätzlich sollen Drehungleichförmigkeiten, die dem Drehmoment überlagert sein können, möglichst wirksam gedämpft bzw. getilgt werden. In einer Ausführungsform umfasst das Übertragungssystem einen hydrodynamischen Drehmomentwandler, der eine Pumpe und eine Turbine umfasst. Die Pumpe ist mit einer Eingangsseite und die Turbine mit einer Ausgangsseite des Übertragungssystems verbunden. Parallel zum hydrodynamischen Drehmomentwandler ist eine steuerbare Reibkupplung vorgesehen, die insbesondere dann geschlossen werden kann, wenn ein Drehzahlunterschied zwischen der Eingangsseite und der Ausgangsseite gering ist. So kann beispielsweise während eines Anfahrvorgangs Drehmoment hauptsächlich über den Drehmomentwandler und während eines Fahrbetriebs hauptsächlich über die Kupplung übertragen werden.

Zur verbesserten Dämpfung der Drehungleichförmigkeiten ist zwischen der Kupplung und der Eingangs- oder Ausgangsseite ein leistungsverzweigtes Dämpfersystem angeordnet. Das Dämpfersystem teilt das zu übertragende Drehmoment in zwei Stränge auf, von denen nur einer ein elastisches Element zur Dämpfung von Drehungleichförmigkeiten umfasst. Ausgangsseitig werden die beiden Stränge mittels eines Summengetriebes zusammengeführt. Bestimmte Schwingungen, die über die beiden Stränge unterschiedlich übertragen werden, können sich dabei in vorteilhafter Weise überlagern und gegenseitig auslöschen.

DE 198 46 445 A1 zeigt ein Drehmoment mit einem leistungsverzweigten Dämpfer und einem hydrodynamischen Drehmomentwandler.

WO 2011/147598 A1 zeigt eine hydrodynamische Kupplungseinrichtung mit einem leistungsverzweigten Dämpfer.

DE 10 2011 075 243 A1 offenbart ein Übertragungssystem für Drehmoment, umfassend: eine Eingangsseite; eine Reibkupplung, die mit der Eingangsseite verbunden ist; ein leistungsverzweigtes Dämpfersystem, das mit der Reibkupplung verbunden ist; eine Ausgangsseite, die mit dem Dämpfersystem verbunden ist; einen hydrodynamischen Drehmomentwandler mit eine Pumpe und einer Turbine.

US 2012/080281 A1 offenbart ein Übertragungssystem, bei dem die Pumpe mit der Eingangsseite und die Turbine mit der Ausgangsseite verbunden ist.

Der Erfindung liegt die Aufgabe zugrunde, ein verbessertes Übertragungssystem für Drehmoment, insbesondere zum Einsatz in einem Antriebsstrang eines Kraftfahrzeugs, bereitzustellen. Die Erfindung löst diese Aufgabe mittels eines Übertragungssystems mit den Merkmalen des unabhängigen Anspruchs. Unteransprüche geben bevorzugte Ausführungsformen wieder.

Ein erfindungsgemäßes Übertragungssystem für Drehmoment umfasst eine Eingangsseite, eine Reibkupplung, die mit der Eingangsseite verbunden ist, ein leistungsverzweigtes Dämpfersystem, das mit der Reibkupplung verbunden ist; ferner eine Ausgangsseite, die mit dem Dämpfersystem verbunden ist und einen hydrodynamischen Drehmomentwandler mit einer Pumpe und einer Turbine, wobei die Pumpe mit der Eingangsseite und die Turbine mit der Ausgangsseite unlösbar verbunden ist.

Dadurch kann die Turbine in verbesserter Weise im Übertragungssystem angeordnet sein. Die Turbine ist durch ihre Platzierung unmittelbar an der Ausgangsseite verbessert dazu eingerichtet, ausgangsseitige Drehungleichförmigkeiten durch ihre Masse oder ihre Übertragungseigenschaften zur Pumpe zu entkoppeln bzw. zu dämpfen.

Zwischen dem Dämpfersystem und der Ausgangsseite ist ein elastisches Element angeordnet. Das elastische Element kann dazu beitragen, Drehungleichförmigkeiten des zu übertragenden Drehmoments zu isolieren. Insbesondere, wenn das Übertragungssystem in einem Antriebsstrang an Bord eines Kraftfahrzeugs angeordnet ist, bei dem ein Antriebsmotor im Frontbereich und Antriebsräder am Heck des Kraftfahrzeugs angeordnet sind, kann das zusätzliche elastische Element ein verbessertes Ansprech- bzw. Übertragungsverhalten des Übertragungssystems unterstützen.

In einer Ausführungsform ist die Ausgangsseite zur drehfesten Verbindung mit einer Getriebeeingangswelle, insbesondere eines Getriebes des Antriebsstrangs, eingerichtet. Die Ausgangsseite kann für zusätzliche Aufgaben innerhalb des Übertragungssystems verwendet werden, beispielsweise zum Zentrieren, radialen oder axialen Abstützen eines weiteren Elements des Übertragungssystems oder zum Übertragen von Drehmoment zwischen einzelnen Elementen. Das Übertragungssystem kann so eine separat handhabbare Einheit bilden, die in Fertigung, Montage und Wartung leichter handhabbar sein kann.

In einer Ausführungsform umfasst die Ausgangsseite eine Verzahnung zur drehfesten Verbindung mit der Getriebeeingangswelle. Dadurch kann eine Montage- oder Demontagefähigkeit des Übertragungssystems verbessert sein.

Die Getriebeeingangswelle kann eine vorbestimmte Drehsteifigkeit aufweisen, wobei eine Drehsteifigkeit des elastischen Elements kleiner als die der Getriebeeingangswelle ist. Dadurch können Vibrationen und ruckartige Drehmomentübertragungen in verbesserter Weise von der Getriebeeingangswelle abgekoppelt werden.

Die Ausgangsseite kann dazu eingerichtet sein, die Turbine bezüglich der Getriebeeingangswelle zu zentrieren. Insbesondere kann die Ausgangsseite als radiale Stütze für die Turbine eingesetzt sein.

Erfindungsgemäß ist die Turbine unlösbar mit der Ausgangsseite verbunden. Die Verbindung kann insbesondere mittels Schweißen, Verstemmen oder Nieten erfolgen. Eine einmal erreichte Präzision der Ausrichtung der Turbine bezüglich einer Drehachse, um die die Ausgangsseite gelagert ist, kann so ungeachtet von Fertigstellungs- und Montageschritten des Systems beibehalten werden.

Bevorzugterweise umfasst die Ausgangsseite eine Nabe. Die Nabe kann insbesondere an ihrer radialen Außenseite zur Abstützung weiterer Elemente des Übertragungssystems eingerichtet sein, während sie an ihrer Innenseite für eine formschlüssige Verbindung mit der oben genannten Getriebeeingangswelle ausgebildet sein kann.

Das leistungsverzweigte Dämpfersystem kann ein Eingangselement, ein elastisches Element, das mit dem Eingangselement verbunden ist, ein Ausgangselement und ein Summengetriebe mit zwei Eingängen und einem Ausgang umfassen, wobei ein Eingang mit dem Eingangselement, der andere mit dem elastischen Element und der Ausgang mit dem Ausgangselement verbunden ist. Derartige leistungsverzweigte Dämpfungssysteme können vorteilhaft gestaltet und in Bezug auf die restlichen Elemente des Übertragungssystems abgestimmt sein.

Das Summengetriebe umfasst vorteilhafterweise ein Umlaufgetriebe. Umlaufgetriebe sind beispielsweise in Form von Planetengetrieben bekannt und können entsprechend den Anforderungen des leistungsverzweigten Dämpfungssystems passend ausgelegt werden. Insbesondere können unterschiedliche Übertragungsfaktoren zwischen den verschiedenen Eingängen und dem Ausgang realisiert werden.

Die Erfindung wird nun mit Bezug auf die beigefügten Figuren genauer beschrieben, in denen:
Fig. 1 eine symbolische Darstellung eines Systems zur Übertragung von Drehmoment und
Fig. 2 einen Längsschnitt durch eine Ausführungsform des Systems von Fig. 1 darstellt.

Das System 100 ist zur Übertragung von Drehmoment in einem Antriebsstrang, insbesondere an Bord eines Kraftfahrzeugs, eingerichtet. Das System 100 umfasst eine Eingangsseite 105 und eine Ausgangsseite 110, die jeweils in Form eines Flanschs, eines Blechs, einer Nabe oder eines sonstigen drehbaren Elements gebildet sein können. Bevorzugterweise ist das System 100 dazu eingerichtet, Drehmoment von der Eingangsseite 105 zur Ausgangsseite 110 zu übertragen, der umgekehrte Weg ist jedoch ebenfalls möglich. Die Eingangsseite 105 ist bevorzugterweise zur drehmomentschlüssigen Verbindung mit einem Antriebsmotor und die Ausgangsseite 110 zur drehmomentschlüssigen Verbindung mit einem Getriebe vorgesehen.

Ein hydrodynamischer Drehmomentwandler 115 umfasst eine Pumpe 120 und eine Turbine 125, wobei die Pumpe 120 mit der Eingangsseite 105 und die Turbine 125 unmittelbar mit der Ausgangsseite 110 verbunden ist. Der Drehmomentwandler 115 umfasst ein Fluid, das die Pumpe 120 mit der Turbine 125 strömungstechnisch koppelt. Mit abnehmender Drehzahldifferenz zwischen der Pumpe 120 und der Turbine 125 sinkt auch ein Kopplungsgrad des Drehmomentwandlers 115. Der Drehmomentwandler 115 wird daher bevorzugt zur Übertragung von Drehmoment verwendet, wenn ein Drehzahlunterschied zwischen der Eingangsseite 105 und der Ausgangsseite 110 groß ist, insbesondere beim Anfahren des oben genannten Kraftfahrzeugs. Nach dem Anfahren wird das Drehmoment bevorzugterweise nicht durch den Drehmomentwandler 115 sondern auf einem anderen Pfad übertragen, der im Folgenden beschrieben wird.

Eine Reibkupplung 130 ist mit der Eingangsseite 105 verbunden. In unterschiedlichen Variationen kann die Reibkupplung 130 eine Einscheiben- oder Mehrscheibenkupplung umfassen, wobei beide Varianten alternativ trocken oder in einem Ölbad laufen können. Eine zweite Seite der Reibkupplung 130 ist mit einem leistungsverzweigten Dämpfungssystem 135 verbunden, das unten noch genauer beschrieben wird. Ausgangsseitig ist das Dämpfungssystem 135 mittels eines elastischen Elements 140 an die Ausgangsseite 110 geführt. Das elastische Element 140 kann in unterschiedlichen Ausführungsformen eine Bogenfeder oder eine Zylinderfeder umfassen. Es können auch Anordnungen mehrerer parallel oder seriell verbundener elastischer Elemente 140 umfasst sein. Außerdem kann ein nicht dargestelltes Dämpfungselement vorgesehen sein, um eine Relativbewegung entgegengesetzter Enden des elastischen Elements 140 zu bedämpfen. Eine Drehsteifigkeit des elastischen Elements 140 liegt bevorzugterweise unter einer Drehsteifigkeit einer Welle, insbesondere einer Getriebeeingangswelle, mit der die Ausgangsseite 110 verbunden werden kann, um das System 100 in einem Antriebsstrang zu verwenden. Anders ausgedrückt ist bevorzugt, dass das elastische Element 140 einer Verdrehung seiner Enden gegeneinander proportional weniger Kraft entgegensetzt als die Getriebeeingangswelle ihrer eigenen Verdrehung.

Das leistungsverzweigte Dämpfungssystem 135 umfasst ein Eingangselement 145 und ein Ausgangselement 150, die jeweils in Form eines beliebigen Kraft bzw. Drehmoment übertragenden Elements gebildet sein können. Die Elemente 145, 150 können insbesondere jeweils als Flansch, Blech, Buchse oder Nabe ausgebildet sein und jedes der Elemente 145, 150 kann auch als Schwungmasse wirken. Ferner umfasst das Dämpfungssystem 135 ein Summiergetriebe 152 mit einem ersten Eingang 155, einem zweiten Eingang 160 und einem Ausgang 165. Während der erste Eingang 155 direkt mit dem Eingangselement 145 verbunden ist, ist zwischen dem zweiten Eingang 160 und dem Eingangselement 145 ein elastisches Element 170 vorgesehen, für das die gleichen konstruktiven Freiheitsgrade wie für das elastische Element 140 gelten. Insbesondere kann das elastische Element 170 auch eine Dämpfungseinrichtung umfassen. Zwischen dem elastischen Element 140 und dem zweiten Eingang 160 kann ein Flansch 175 vorgesehen sein, der zur Übertragung von Drehmoment bzw. Kraft eingerichtet ist und optional zusätzlich Eigenschaften einer Schwungmasse aufweisen kann.

Das Summiergetriebe 152 addiert die an den Eingängen 155, 160 anliegenden Kräfte auf und gibt die Summe am Ausgang 165 ab. Dabei können durch Wahl entsprechender Übersetzungsverhältnisse des Summiergetriebes 152 die beiden Eingänge 155 und 160 unterschiedlich gewichtet werden. Bevorzugterweise umfasst das Summiergetriebe 152 eine Anordnung mit Zahnrädern, insbesondere in Form eines Umlaufrädergetriebes. Andere Ausführungsformen können mittels Hebeln oder hydraulisch realisiert sein.

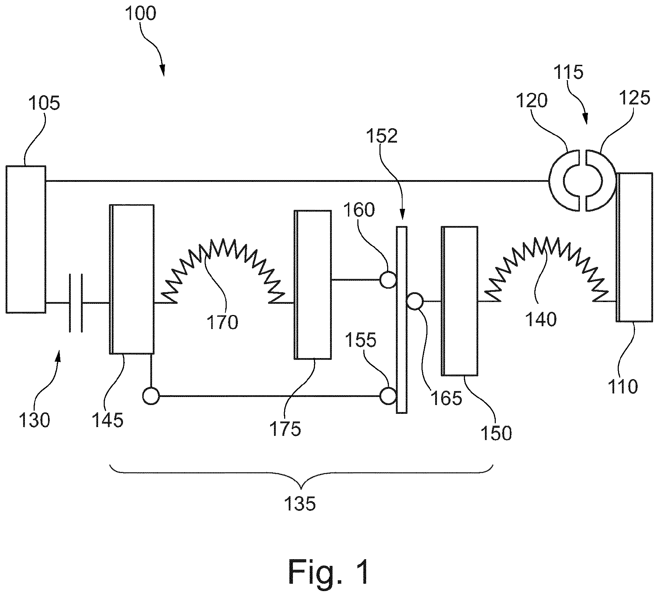

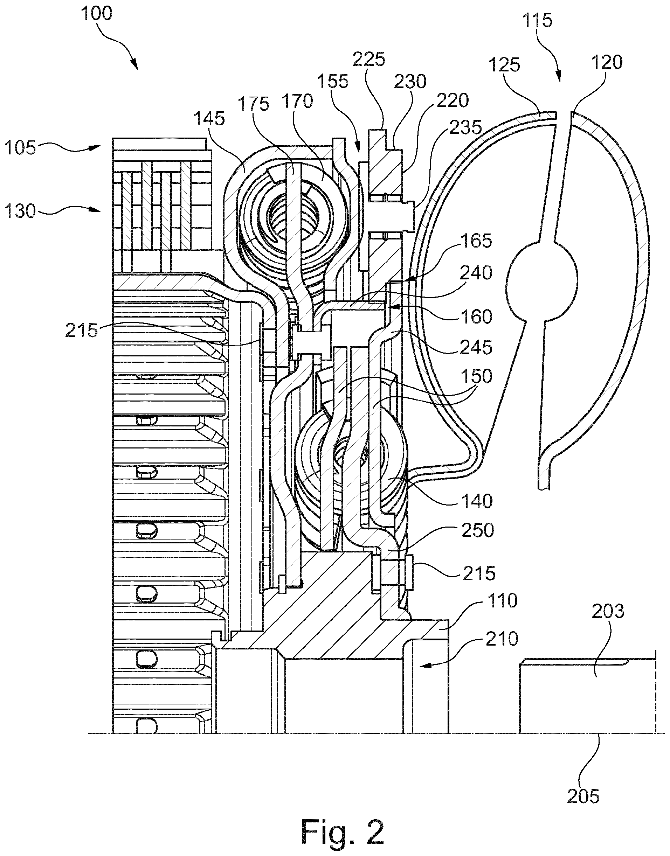

Fig. 2 zeigt einen Längsschnitt durch eine Ausführungsform des Systems 100 von Fig. 1. Die Eingangsseite 105 an der Kupplung 130 und die Pumpe 125 des hydrodynamischen Drehmomentwandlers 115 sind zeichnerisch nur angedeutet und eine drehmomentschlüssige Verbindung zwischen den beiden Elementen ist nicht dargestellt. Die Eingangsseite 205 ist exemplarisch an einem Außenlamellenträger der Reibkupplung 130 gebildet.

Zur verbesserten Erläuterung ist zusätzlich eine Getriebeeingangswelle 203 dargestellt, mit der die Ausgangsseite 110 des Systems 100 drehmomentschlüssig verbunden werden kann. Die Getriebeeingangswelle 203 kann Teil eines Getriebes, beispielsweise in einem Antriebsstrang eines Kraftfahrzeugs, sein.

Die Eingangsseite 105 und die Ausgangsseite 110 sind bezüglich einer gemeinsamen Drehachse 205 drehbar gelagert. Die Ausgangsseite 110 ist bevorzugterweise als Nabe ausgeführt, wobei eine radiale Außenseite der Ausgangsseite 110 zur Zentrierung bzw. radialen Anlage weiterer Elemente des Systems 100 dienen kann und eine radiale Innenseite bevorzugterweise eine Verzahnung 210 trägt, um die Ausgangsseite 110 in axialer Richtung an der Getriebeeingangswelle 203 anbringen zu können, um die beiden Elemente drehmomentschlüssig miteinander zu verbinden.

Ein Drehmomentfluss von der Eingangsseite 105 zur Ausgangsseite 110 auf dem Pfad durch das leistungsverzweigte Dämpfungssystem 135 soll nun kurz nachvollzogen werden. Der Pfad beginnt an der Eingangsseite 105 und führt zunächst zur Kupplung 130. Die Kupplung 130 ist ausgangsseitig mit dem Eingangselement 145 des Dämpfungssystems 135 verbunden, in beispielhafter Weise in Fig. 2 mittels Nieten 215. Das Eingangselement 145 bildet in der dargestellten Ausführungsform gleichzeitig eine radiale und eine axiale Halterung für das elastische Element 170, wobei eine Reibung zwischen dem elastischen Element 170 und dem Eingangselement 145 zur Dämpfung der elastischen Bewegung verwendet werden kann. Das beispielhaft dargestellte elastische Element 170 umfasst zwei koaxial zueinander angeordnete, parallelgeschaltete Bogenfedern.

Das Summiergetriebe 152 ist als Umlaufrädergetriebe ausgebildet, das ein Planetenrad 220 mit zwei Außenverzahnungen 225, 230 unterschiedlicher Durchmesser umfasst. Das Planetenrad 220 ist um eine Achse 235 drehbar angeordnet, die am Eingangselement 145 fest angebracht ist. Bezüglich der Drehachse 205 dient die Achse 235 als erster Eingang 155, die Verzahnung 225 als zweiter Eingang 160 und die Verzahnung 230 als Ausgang 165. Die Verzahnung 225 kämmt in einem ersten Sonnenrad 240, das an dem Flansch 175 angebracht ist und die Verzahnung 230 kämmt in einem zweiten Sonnenrad 245, das vom Ausgangselement 150 umfasst ist. Beide Sonnenräder sind konzentrisch zur Drehachse 105 angeordnet.

Über das Ausgangselement 150 wird Kraft in das elastische Element 140 eingeleitet, das beispielhaft wie das elastische Element 170 als koaxiale Anordnung zweier koaxialer, parallel geschalteter Bogenfedern ausgeführt ist. Das elastische Element 140 überträgt Kraft an einen Flansch 250, der drehfest mit der Ausgangsseite 110 verbunden ist. Diese Verbindung ist bevorzugterweise unlösbar, beispielsweise in Form einer Verschweißung oder Verstemmung. In der dargestellten Ausführungsform greift die Turbine 125 am Flansch 250 ein und ist formschlüssig mit diesem verbunden, vorliegend in beispielhafter Weise mittels Nieten 215. In anderen Ausführungsformen kann die Turbine 125 auch an der Ausgangsseite 110 angebracht sein. Bevorzugterweise ist die Verbindung zwischen der Turbine 125 und der Ausgangsseite 110 möglichst drehsteif; zu diesem Zweck werden kurze Kraftwege zwischen der Verzahnung 210 zur Aufnahme der Getriebeeingangswelle 203 und der Turbine 120 bevorzugt.

### Bezugszeichenliste

100 : System
105 : Eingangsseite
110 : Ausgangsseite
115 : hydrodynamischer Drehmomentwandler
120 : Pumpe
125 : Turbine
130 : Reibkupplung
135 : leistungsverzweigtes Dämpfungssystem
140 : elastisches Element
145 : Eingangselement
150 : Ausgangselement
152 : Summiergetriebe
155 : erster Eingang
160 : zweiter Eingang
165 : Ausgang
170 : elastisches Element
175 : Flansch
203 : Getriebeeingangswelle
205 : Drehachse
210 : Verzahnung
215 : Niete
220 : Planetenrad
225 : erste Verzahnung
230 : zweite Verzahnung
235 : Achse
240 : erstes Sonnenrad
245 : zweites Sonnenrad
250 : Flansch

## Patentansprüche

1. Übertragungssystem (100) für Drehmoment, umfassend:
- eine Eingangsseite (105);
- eine Reibkupplung (130), die mit der Eingangsseite (105) verbunden ist;
- ein leistungsverzweigtes Dämpfersystem (135), welches das zu übertragende Drehmoment in zwei Stränge aufteilt, von denen nur einer ein elastisches Element zur Dämpfung von Drehungleichförmigkeiten umfasst, wobei ausgangsseitig die beiden Stränge mittels eines Summengetriebes zusammengeführt werden, wobei das leistungsverzweigte Dämpfersystem (135) mit der Reibkupplung (130) verbunden ist;
- eine Ausgangsseite (110), die mit dem Dämpfersystem (135) verbunden ist;
- einen hydrodynamischen Drehmomentwandler (115) mit einer Pumpe (1205) und einer Turbine (125),
- wobei die Pumpe (120) mit der Eingangsseite (105) und die Turbine (125) mit der Ausgangsseite (110) unlösbar verbunden ist, wobei die Turbine (125) unmittelbar mit der Ausgangsseite (110) verbunden ist,
und
wobei zwischen dem Dämpfersystem (135) und der Ausgangsseite (110) ein elastisches Element (140) angeordnet ist.

2. Übertragungssystem (100) nach einem der vorangehenden Ansprüche, wobei die Ausgangsseite (110) zur drehfesten Verbindung mit einer Getriebeeingangswelle (203) eingerichtet ist.

3. Übertragungssystem (100) nach Anspruch 2, wobei die Ausgangsseite (110) eine Verzahnung (210) zur drehfesten Verbindung mit der Getriebeeingangswelle (203) umfasst.

4. Übertragungssystem (100) nach einem der Ansprüche 2 oder 34, wobei die Getriebeeingangswelle (203) eine vorbestimmte Drehsteifigkeit aufweist und eine Drehsteifigkeit des elastischen Elements (140) kleiner als die der Getriebeeingangswelle (203) ist.

5. Übertragungssystem (100) nach einem der Ansprüche 2 bis 4, wobei die Ausgangsseite (110) dazu eingerichtet ist, die Turbine (125) bezüglich der Getriebeeingangswelle (203) zu zentrieren.

6. Übertragungssystem (100) nach einem der vorangehenden Ansprüche, wobei die Ausgangsseite (110) eine Nabe umfasst.

7. Übertragungssystem (100) nach einem der vorangehenden Ansprüche, wobei das leistungsverzweigte Dämpfersystem (135) folgendes umfasst:
- ein Eingangselement (145);
- ein elastisches Element (170), das mit dem Eingangselement (145) verbunden ist;
- ein Ausgangselement (150);
- ein Summengetriebe (152) mit zwei Eingängen (155, 160) und einem Ausgang (165), wobei ein Eingang (155) mit dem Eingangselement (145), der andere mit dem elastischen Element (170) und der Ausgang (165) mit dem Ausgangselement (150) verbunden ist.

8. Übertragungssystem (100) nach einem der vorangehenden Ansprüche, wobei das Summengetriebe (152) ein Umlaufgetriebe (220, 240, 245) umfasst.

## Claims

1. Transmission system (100) for torque, comprising:
- an input side (105);
- a friction clutch (130) which is connected to the input side (105);
- a power-split damper system (135) which divides the torque to be transmitted into two branches, of which only one comprises an elastic element for damping rotational non-uniformities, the two branches being combined on the output side by means of a summing gear mechanism, the power-split damper system (135) being connected to the friction clutch (130);
- an output side (110) which is connected to the damper system (135);
- a hydrodynamic torque converter (115) with a pump (120) and a turbine (125),
- the pump (120) being connected non-releasably to the input side (105), and the turbine (125) being connected non-releasably to the output side (110), the turbine (125) being connected directly to the output side (110),
and an elastic element (140) being arranged between the damper system (135) and the output side (110).

2. Transmission system (100) according to one of the preceding claims, the output side (110) being set up for connecting fixedly to a transmission input shaft (203) so as to rotate with it.

3. Transmission system (100) according to claim 2, the output side (110) comprising a gear tooth system (210) for connecting fixedly to the transmission input shaft (203) so as to rotate with it.

4. Transmission system (100) according to either of claims 2 or 3, the transmission input shaft (203) having a predefined torsional rigidity, and a torsional rigidity of the elastic element (140) being lower than that of the transmission input shaft (203).

5. Transmission system (100) according to one of claims 2 to 4, the output side (110) being set up to centre the turbine (125) with regard to the transmission input shaft (203).

6. Transmission system (100) according to one of the preceding claims, the output side (110) comprising a hub.

7. Transmission system (100) according to one of the preceding claims, the power-split damper system (135) comprising the following:
- an input element (145);
- an elastic element (170) which is connected to the input element (145);
- an output element (150);
- a summing gear mechanism (152) with two inputs (155, 160) and an output (165), one input (155) being connected to the input element (145), the other input being connected to the elastic element (170), and the output (165) being connected to the output element (150).

8. Transmission system (100) according to one of the preceding claims, the summing gear mechanism (152) comprising a planetary gear mechanism (220, 240, 245).

## Revendications

1. Système de transmission (100) pour couple de rotation, comprenant :
- un côté d'entrée (105) ;
- un embrayage à friction (130) qui est relié au côté d'entrée (105) ;
- un système amortisseur (135) à dérivation de puissance qui répartit le couple de rotation à transmettre entre deux chaînes parmi lesquelles seule une comprend un élément élastique pour amortir les degrés d'uniformité de la rotation, les deux chaînes étant guidées conjointement du côté de sortie à l'aide d'un entraînement combiné, le système amortisseur (135) à dérivation de puissance étant relié à l'embrayage à friction (130) ;
- un côté de sortie (110) qui est relié au système amortisseur (135) ;
- un convertisseur de couple de rotation (115) hydrodynamique avec une pompe (120) et une turbine (125) ;
- la pompe (120) étant reliée de façon non amovible au côté d'entrée (105) et la turbine (125) étant reliée de façon non amovible au côté de sortie (110), la turbine (125) étant directement reliée au côté de sortie (110) ;
et un élément élastique (140) étant disposé entre le système amortisseur (135) et le côté de sortie (110).

2. Système de transmission (100) selon l'une quelconque des revendications précédentes, le côté de sortie (110) étant conçu pour être relié de façon solidaire en rotation à un arbre d'entrée de transmission (203).

3. Système de transmission (100) selon la revendication 2, le côté de sortie (110) comprenant un endentement (210) pour la liaison solidaire en rotation à l'arbre d'entrée de transmission (203).

4. Système de transmission (100) selon l'une quelconque des revendications 2 ou 3, l'arbre d'entrée de transmission (203) comportant une rigidité de rotation prédéterminée et une rigidité de rotation de l'élément élastique (140) inférieure à celle de l'arbre d'entrée de transmission (203).

5. Système de transmission (100) selon l'une quelconque des revendications 2 à 4, le côté de sortie (110) étant conçu pour centrer la turbine (125) par rapport à l'arbre d'entrée de transmission (203).

6. Système de transmission (100) selon l'une quelconque des revendications précédentes, le côté de sortie (110) comprenant un moyeu.

7. système de transmission (100) selon l'une quelconque des revendications précédentes, le système amortisseur (135) à dérivation de puissance comprenant les éléments suivants :
- un élément d'entrée (145) ;
- un élément élastique (170) relié à l'élément d'entrée (145) ;
- un élément de sortie (150) ;
- un entraînement combiné (152) avec deux entrées (155, 160) et une sortie (165), une entrée (155) étant reliée à l'élément d'entrée (145), l'autre étant reliée à l'élément élastique (170) et la sortie (165) étant reliée à l'élément de sortie (150).

8. Système de transmission (100) selon l'une quelconque des revendications précédentes, l'entraînement combiné (152) comprenant un engrenage planétaire (220, 240, 245).
